# EUROPEAN PATENT APPLICATION

(11) **EP 1 274 163 A1**
(43) Date of publication of application: **08.01.2003**
(21) Application number: 01410081.2
(22) Date of filing: 03.07.2001
(51) Int. Cl.: H02M 3/158

(54) **Circuit for a switch-mode power supply unit**

(71) Applicant: Hewlett-Packard Company (a Delaware corporation), Palo Alto, CA 94304 (US)
(72) Inventor: Navarro Sanchez, Samuel, 38000 Grenoble (FR)
(74) Representative: Lloyd, Richard Graham

(57) **Abstract**

A power supply unit comprises a first switching circuit associated with capacitive and/or inductive impedance for generating at an output a DC output voltage, and a second switching circuit for selectively adding at said output a boost current upon sharp current demands from equipment powered by said power supply unit. Said second switching circuit comprises a switch which is connected directly to said output and a comparator for comparing the actual voltage at said output with a reference voltage obtained by lowering and filtering said actual voltage.

Noise immunity is improved, i.e. overheating of the second switching circuit due to unnecessary switching is avoided, while the second switching circuit can operate with a variable voltage unit if required.

## Description

The present invention generally relates to power supply circuits. More particularly, although not exclusively, the present invention relates to DC-DC converter or switchmode power supplies.

### Background of the invention

A DC-DC converter generally comprises a pair of switches such as power transistors controlled by pulse width modulated signals and receiving an input DC voltage. In combination with an impedance circuit (inductors and/or capacitors), the circuit delivers an appropriate DC output voltage which is fixed or variable.

An improved version of a DC-DC converter comprises in a known manner a current-boost circuit or glitch suppressor comprising an additional switch such as another power transistor which is turned on and off according to sudden current demands from the circuits which are powered with the DC-DC converter and which is capable to quickly deliver the additional current required without giving rise to any excessive decrease of the power supply output voltage. such a current-boost circuit allows to decrease the global capacitance value of the smoothing capacitor(s) associated with the power supply unit to be decreased, and/or the number of such capacitors to be reduced in order to save costs and space.

An example of such circuit is described in a datasheet "High-Speed Step-Down Controller with Synchronous Rectification for CPU Power", MAX 1638 issued by the U.S. company Maxim Integrated Products.

Such known improved DC-DC converters incorporate a resistor in series with the current-boost transistor, which decreases the overall performance of the current-boost circuit, because the current boost capability will be limited by the resistor.

Another drawback of existing current boost circuits is that, if the noise content of the output voltage is high, the current-boost transistor will be switched on and off very often and at a possibly very high frequency. This will depend on noise peaks present in the output voltage. The transistor will therefore be subject to undesirable overheating.

Modern DC-DC converter based power supply units, in particular for computer microprocessors, are capable of delivering variable voltages according to the current drawn by the microprocessor. This variable voltage feature, by lowering the power supply voltage while a high current is drawn, typically avoids applying an over-voltage to the microprocessor when the current sharply decreases. Conversely, by increasing the power supply voltage while a low current is drawn, it avoids applying to the microprocessor an under voltage when the current sharply increases.

A further drawback with known current-boost circuits is that they are operable only with fixed voltage power supply circuits and cannot be employed in the context of variable voltage power supply units as described above. This is because as the voltage is decreased at the DC-DC converter level to follow a variable target voltage, the current boost transistor will perform voltage regulation on its own and will be subject to overheating.

### Summary of the Invention

An object of the present invention is thus to provide a current-boost feature in which the current-boost switch, such as a transistor, is less exposed to overheating due to repeated switching, and which still provides the required additional current whenever necessary.

Another objective of the present invention is to allow the current-boost feature to be implemented, if desirable, with variable voltage power supply units.

The present invention provides, according to a first aspect, a power supply unit comprising a first switching circuit associated with capacitive and/or inductive impedance for generating at an output a DC output voltage, and a second switching circuit for selectively adding at said output a boost current in response to current demands from equipment powered by said power supply unit, wherein said second switching circuit includes a switch which is connected directly to said output and a comparator for comparing the actual voltage at said output with a reference voltage obtained by lowering and filtering said actual voltage.

Preferred but non-limiting aspects of the above-defined power supply unit are as follows:
- the unit may comprise a resistor divider bridge receiving said actual voltage at an input adapted to lower said actual voltage.
- the unit may comprise a capacitor in parallel with the output of said divider bridge adapted to filter said actual voltage.
- said comparator may have first input connected to the output of said divider bridge and a second input connected to the output of the first switching circuit.
- the level of said reference voltage may be between .90 and .99 times the mean level of said actual voltage.
- said first switching circuit is controllable so as to vary the mean value of the DC output voltage.

According to another aspect, the present invention provides a method for regulating the output voltage of a power supply unit, the method comprising the following steps:
- controlling the switching of a first switching circuit associated with an impedance circuit for generating a basic regulated DC output voltage,
- generating a reference voltage by lowering and filtering the DC output voltage,
- comparing the actual value of the DC output voltage with said reference voltage, and
- controlling a second switching circuit in response to the comparison step in order to supply to the output of the power supply unit with boost current.

In a preferred embodiment, the step of controlling the switching of the first switching circuit is performed so as to vary the mean value of the DC output voltage.

The present invention also provides the use of the method as defined above for powering electronic circuitry of a computer equipment.

### Brief description of the drawings

A preferred but non-limiting embodiment of the present invention will now be described in detail with reference to the appended drawings, in which:
Fig. 1 illustrates a schematic diagram of a power supply unit; and
Figs. 2A and 2B are time diagrams showing the behavior of the circuit of Fig. 1 with noiseless and noisy output voltages, respectively.

### Detailed description of the preferred embodiment

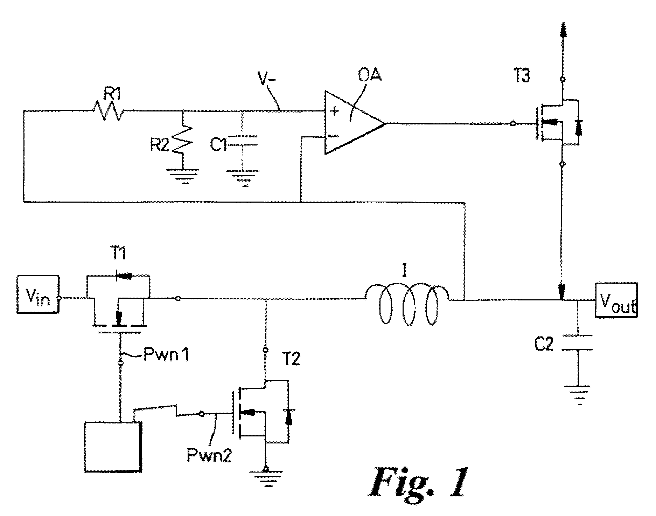

Referring to Fig. 1, a power supply circuit, in particular for computer equipment, comprises an input DC voltage source Vin, a pair of transistors T1 and T2 connected in series between said voltage source and ground, a control unit CU for applying to transistors T1 and T2 two pulse width modulated (PWM) signals PWM1 and PWM2 in phase opposition to transistors T1 and T2, respectively, an inductor I connected in series between the common connection of transistors T1 and T2 and an output terminal for the output voltage Vout of the unit, as well as one or several high capacitance capacitors (collectively shown in C2 in the drawing).

This known DC-DC circuit generates a regulated output voltage Vout by appropriate feedback means (not shown). The smoothness and noise-free character of said voltage is mainly determined by appropriate design and selection of inductor I and capacitors C2. These components are, in general, distributed at appropriate locations on a computer equipment motherboard and/or in power supply unit.

The power supply unit additionally includes a current-boost transistor T3 which is connected to a voltage source Vin (or a different voltage source) and directly to the Vout terminal, and which is intended to allow the power supply unit to meet sudden current demands which can occur in the operation of a computer equipment. T3 is preferably a N-MOS power transistor.

A divider bridge made of a pair of series-connected resistors R1 and R2 is connected between Vout and ground. The resistance values of R1 and R2 are selected so that the divider bridge has a multiplying factor somewhat lower than 1, and preferably between .90 and .99 (e.g. approximately .95). The midpoint of divider bridge R1, R2 is connected to a first terminal of a capacitor C1, the second terminal of which is connected to ground. The first terminal of capacitor C1 is connected to the inverting input of an operational amplifier OA which acts as a comparator. In this manner, a reference voltage generated by lowering and filtering the actual Vout voltage is applied to the comparator. This reference voltage is denoted V-. The noninverting input of comparator OA is connected to the Vout terminal.

The output of comparator OA is connected to the base of transistor T3 so as to control the turning on and off of the latter. It should be noted here that, in the present embodiment, T3 input is inverted, whereby a high output of comparator OA will turn T3 off, while a low output of comparator OA will turn T3 on.

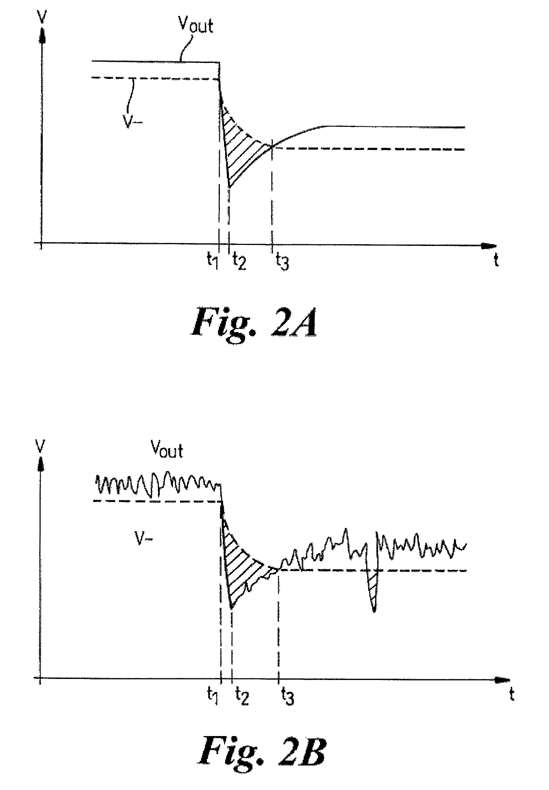

The operation of the circuit as shown in Fig. 1 will now be explained with reference to Figs. 2A and 2B.

First of all, Fig. 2A shows a situation where the output voltage Vout is not susceptible to noise.

On the left side of Fig. 2A, a situation is illustrated where Vout is steady and V- is at a level somewhat lower than Vout, as explained above. For instance, Vout is at 5 volts while V- is at 4.75 volts in the example given in the foregoing. In this situation, comparator OA delivers a high level, whereby T3 is off, and the voltage is regulated in the normal fashion by appropriate control of T1 and T2.

When Vout undergoes a sharp decrease as shown between times t1 and t2, Vout quickly goes lower than V-, which decays much more slowly due to the time constant of circuit R1, R2 and C1. In such situation, comparator OA delivers a low voltage level, whereby T3 is turned on and an additional current or boost current can be drawn through T3 to the equipment connected to Vout.

The providing of boost current is indicated by the hatched area in Fig. 2A.

This boost current causes Vout to start increasing from time t2, while V-continues to decrease.

At the time where the Vout voltage gets again above the V- voltage (time t3), comparator OA delivers a high level, whereby T3 is turned off so that no more boost current is provided to the Vout terminal.

From that moment, Vout and V- will progressively stabilize to respective levels which are identical to or different from the original levels. In Fig. 2A, a situation has been shown where the new levels are different from the original ones.

This situation typically corresponds to the case where the power supply unit outputs a variable voltage and where the level of voltage Vout is governed by the actual current consumption of the equipment. In Fig. 2A, the new level of Vout is less than the original output because of increased current consumption.

It can be understood from figures 1 and 2A that the circuit according to the present invention is designed to operate independently of the actual voltage value of Vout. More particularly, in the right section of Fig. 2A, the circuit is operating in a regime where, although the voltage values of Vout and V- are different, the boost current supply will still be able to operate in the same manner as described as above. The main reason for this is that the voltage V- changes in manner which is dependant on the voltage Vout.

Fig. 2B illustrates the case where Vout has a mean value which corresponds to the situation of Fig. 2A, but is impacted by a variable amount of noise.

In the left part of Fig. 2B, it can be seen that the noise level is too low to cause the Vout actual voltage to go lower than V-. Thus comparator OA does not perform any action and T3 remains turned off. It should be noted here that the level of V- remains steady during that time because the noise is substantially filtered out by capacitor C1.

In the middle part of Fig. 2B, it can be seen that, despite the existence of noise, the behavior of the circuit remains essentially unchanged, i.e. transistor T3 is turned on to provide required boost current whenever necessary.

The right part of Fig. 2B shows a high noise region. Here, the negative peak of noise brings the actual voltage of Vout under the steady V- level between times t4 and t5, whereby during this short period of time, T3 will be turned on and provide some boost current. However, it is understood that the relative level of V-(determined by the values of R1 and R2) can be readily adjusted to minimize the occurrence of such undesirable switching of T3, while allowing a prompt reaction when Vout sharply decreases due to a significant current demand.

Therefore, unnecessary switching of T3, which otherwise could occur at extremely high frequencies (depending on noise spectral contents), is avoided, and therefore overheating of T3 is also avoided.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A power supply unit comprising a first switching circuit associated with capacitive and/or inductive impedance for generating at an output a DC output voltage, and a second switching circuit for selectively adding at said output a boost current upon sharp current demands from equipment powered by said power supply unit, wherein said second switching circuit comprises a switch which is connected directly to said output and a comparator for comparing the actual voltage at said output with a reference voltage obtained by lowering and filtering said actual voltage.

2. A power supply unit according to claim 1, comprising a resistor divider bridge receiving said actual voltage at an input for lowering said actual voltage.

3. A power supply unit according to claim 2, comprising a capacitor in parallel with the output of said divider bridge for filtering said actual voltage.

4. A power supply unit according to claim 3, wherein said comparator has a first input connected to the output of said divider bridge and a second input connected to the output of the first switching circuit.

5. A power supply unit according to claim 1, wherein the level of said reference voltage is comprised between .90 and .99 times the mean level of said actual voltage.

6. A power supply unit according to claim 1, wherein said first switching circuit is controllable so as to vary the mean value of the DC output voltage.

7. A method for regulating the output voltage of a power supply unit, comprising the following steps:
- controlling the switching of a first switching circuit associated with an impedance circuit for generating a basic regulated DC output voltage,
- generating a reference voltage by lowering and filtering the DC output voltage,
- comparing the actual value of the DC output voltage with said reference voltage, and
- controlling a second switching circuit in response to the comparison step in order to supply to the output of the power supply unit with boost current.

8. A method according to claim 7, wherein the level of said reference voltage is comprised between .90 and .99 times the mean level of said actual voltage.

9. A method according to claim 7 or 8, wherein the step of controlling the switching of the first switching circuit is performed so as to vary the mean value of the DC output voltage.

10. The use of the method according to claim 7 for powering electronic circuitry of a computer equipment.
